# EUROPEAN PATENT SPECIFICATION

(11) **EP 4 524 033 B1**
(45) Date of publication and mention of the grant of the patent: **26.08.2026**
(21) Application number: 23197206.8
(22) Date of filing: 13.09.2023
(51) Int. Cl.: B64D 13/00, B64D 13/06

(54) **HOT AIR DUCT FOR A BILGE AREA IN AN AIRCRAFT**
HEISSLUFTLEITUNG FÜR EINEN BILGENBEREICH IN EINEM FLUGZEUG
CONDUIT D'AIR CHAUD POUR UNE ZONE DE CALE DANS UN AÉRONEF

(43) Date of publication of application: 19.03.2025
(73) Proprietor: Airbus Operations GmbH, 21129 Hamburg (DE)
(72) Inventor: Lohmar, Jens, 21129 Hamburg (DE); Stein, Sven, 21129 Hamburg (DE)
(74) Representative: Airbus Germany

(56) References cited:
- CA-A1- 2 889 085
- GB-A- 114 099
- SE-B- 445 853
- US-A- 3 567 134
- US-A1- 2007 095 521
- US-A1- 2010 212 768
- US-A1- 2014 263 837
- US-A1- 2023 271 714

## Description

The present disclosure generally relates to a hot air duct for an aircraft, as well as an aircraft section and an aircraft being equipped with such hot air duct. Particularly, the present disclosure relates to a hot air duct for a bilge area of the aircraft, the hot air duct having a body made of a flexible material and configured to be inflated via an inlet. The present disclosure further relates to an aircraft section having such hot air duct as well as an aircraft having such hot air duct and/or such aircraft section.

A conventional aircraft comprises a plurality of heat generating devices, which are often installed in or near a cargo area of the aircraft. Thus, the heat generating devices are installed rather close to a bottom area of the aircraft, also called a bilge area of the aircraft.

Due to this location some aircrafts have been equipped with a skin heat exchanger in the bilge area, specifically the aircraft skin delimiting the bilge area. The waste heat of the heat generating devices is then cooled via such skin heat exchanger. However, this increases costs and, particularly, weight of the aircraft, as the skin heat exchanger has to be integrated into the primary structure of the aircraft.

Alternatively, the waste heat is removed from the heat generating devices by an air stream that is released overboard through a corresponding opening in the aircraft skin. This, however, increases drag of the aircraft and requires additional pressurisation management efforts for the pressurised cabin of the aircraft.

Examples of the prior art are provided by US2007095521A1 and US2023271714A1. In both cases heat generated by a heat generating equipment is removed by a heat conveyance medium which uses an aircraft skin as heat sink.

It is therefore an object of the present disclosure to provide a simple and cost-effective possibility to remove waste heat in an aircraft.

This object is solved by the present invention as defined in the independent claim.

Preferred embodiments are defined by the dependent claims.

According to a first aspect, there is provided an aircraft section comprising an aircraft skin, a cargo floor forming a bilge area between the aircraft skin and the cargo floor and a hot air duct arranged in the bilge area. The hot air duct comprises a body, and an inlet in the body, the inlet being configured to receive hot air. The body is made of a flexible material and is configured to be inflated if air is received through the inlet.

The flexibility and inflatability of the duct allow provision of a lightweight duct to be installed in the aircraft, that can transport hot air away from a heat source. In addition, when inflating the body of the hot air duct, the body can huddle against one or more aircraft structures, such as portions of the primary structure and/or a cargo floor and/or struts arranged in the aircraft section comprising the hot air duct. To huddle against an aircraft structure means that the body of the hot air duct abuts against the structure, when the body is inflated, wherein the corresponding body section can further surround or partially encircle the aircraft structure. Thus, the aircraft structure(s) can be employed as a heat sink, if the heat can pass through the flexible material of the body from the hot air into the aircraft structure(s).

As a mere example, during flight at a high altitude, the primary structure of the aircraft as well as further structures connected thereto or in its vicinity will become quite cold. Thus, the air in the inflatable hot air duct can be cooled easily, and over the entire hull formed by the body of the hot air duct.

For instance, the bilge of the aircraft extends in the longitudinal direction over a large portion of the aircraft. This allows sizing the body of the hot air duct in the longitudinal direction of the aircraft as far as possible. Thus, the surface of the body of the hot air duct and, hence, the area for possible heat exchange, can become quite large. For instance, the size of the body of the hot air duct can be chosen depending on the amount of heat to be transmitted/exchanged.

In the present disclosure, reference is made to a ceiling, a bottom, lateral sides, lower and higher, et cetera. It is to be understood that such terms are meant with respect to an aircraft in a usual position, such as standing on the ground. Likewise, "longitudinally" is to be understood as a direction defined by the ends of a corpus being the furthest away from one another. For instance, in case of an aircraft, the longitudinal direction extends from fore to aft. A transverse direction is arranged perpendicular to the longitudinal direction, particularly in a width wise direction of the corpus. Further reference is made to upstream and downstream directions or ends, which is to be understood as relative to a stream (e.g., of hot air through a duct).

The body of the hot air duct being flexible is to be understood as the material of the body being capable of taking any shape, if not inflated, including lying in the aircraft area in a slack state. For instance, a ceiling of the body can lie on a bottom of the body, if the air inside of the body is escaped. Once air is introduced/conveyed into the interior volume of the body, the interior volume of the body increases and, depending on the interior pressure of the introduced air, the body inflates.

The flexible material may be non-elastic, so that the body does not expand during inflation. This increases the lifespan of the body and avoids bursting due to worn elastic areas. In addition, the body may be specifically formed and configured to fit into the aircraft section or aircraft area, particularly fits between the primary structure of the aircraft. It is to be understood that a certain degree of elasticity may be inherent to the body, but may be neglected in the majority of implementation variants of the present disclosure.

In an implementation variant, the material of the body can comprise or can be a fabric, including a woven, non-woven, fleece-like material and the like. The fabric can be substantially fluid tight, so that the hot air introduced into the body can build up a certain pressure inside of the body achieving inflation of the body.

The material of the body, at least in one or more sections of the body, can have a certain degree of leakiness, so that a (small) amount of the hot air is released into the surrounding of the body and, hence, dispersed in the aircraft section. This allows releasing the hot air over the respective surface area(s) of the body, where it will be cooled down, particularly if the surrounding structure of the aircraft is cold. The cold air can then be conveyed back to the heat source, so that the hot air duct functions as an enlarged heat exchanger in the aircraft section. Specifically, the hot air is dispersed over an area in the aircraft section corresponding to the size of the hot air duct, which facilitates cooling the air.

Furthermore, the material of the body can comprise or can be a foil and/or a fibre reinforced flexible material. Such foil may be quite thin compared to a fabric, which allows further decreasing the weight of the hot air duct.

Furthermore, the hot air duct can further comprise a bottom having at least one first section configured to huddle against an aircraft skin in the bilge area. To huddle against the aircraft skin is to be understood as abutting and contacting the aircraft skin. Thus, a direct heat transmission/exchange via the hot air duct contacting the aircraft skin is possible, which is very effective, particularly if the aircraft skin is exposed to cold ambient air (such as during a flight at a high altitude). The air inside of the body will, hence, be cooled.

This allows receiving cooled air from the body of the hot air duct. For instance, the hot air duct may comprise an outlet at the body, at which cooled air can be received. The outlet may be arranged at an end of the body, preferably, opposite to an end of the body comprising the inlet. In other words, the hot air introduced into the body has to pass through the entire length (longitudinal extent) of the body, so that it is exposed to a maximum of the first sections of the body, i.e., a maximum possible heat exchange is achieved.

In another implementation variant, the at least one first section (of the hot air duct bottom) is formed corresponding to or has a size fitting between structural elements arranged on the aircraft skin. As a mere example, one or more frames and/or stringers can be arranged on the aircraft skin forming a grid. The body of the hot air duct can be configured to have a shape corresponding to the grid, so that portions of the body huddle against the aircraft skin between the structural elements forming the grid.

As a mere example, the at least one first section may have a shape corresponding to the grid-like aircraft structure and aircraft skin. Thus, when being inflated, the at least one first section fills out the area between the structural elements, so that it can contact the aircraft skin between the structural elements and may further huddle against the structural elements. For example, the body may comprise one or more tucks corresponding to the structural elements. It is to be understood that the body may have several first sections corresponding to several aircraft skin sections between structural elements, wherein a tuck is positioned corresponding to the location of a structural element.

The hot air duct comprises a bottom having at least one second section with a plurality of holes configured to create air jets by releasing the hot air from the body. In other words, the at least one second section is perforated, so that a predefined stream of air (the air jets) is formed at a bottom side of the body. It is to be understood that the plurality of holes releases the hot air from the body to such an extent that the material of the body can still be inflated. This allows providing a static pressure throughout the hot air duct body, which further allows providing the same pressure and, hence, the same air stream at each of the plurality of holes.

In this case, the hot air duct can comprise an outlet. For instance, the outlet may be controllable with respect to the volume flow of air released through the outlet. This allows controlling the inflation state of the body.

In another implementation variant, the plurality of holes can be configured to release the hot air from the body with a volume flow equal to or less than a volume flow of the received hot air entering the body at the inlet. Thus, a static pressure can be built up inside of the body, and the body is able to inflate. Since the hot air can be solely released through the plurality of holes, an outlet can be dispensed with. As a mere example, the volume flow of hot air introduced through the inlet can be always the same, and the plurality of holes may allow releasing the same volume flow of air, so that no outlet is necessary.

In yet a further implementation variant, the body corresponding to the at least one second section can be formed or sized, so that the at least one second section is spaced apart from an aircraft skin. For instance, the body can be designed to lay on one or more structural elements of the aircraft, such as a frame and/or stringer. In addition, the bottom of the body may be formed and sized, so that the second section of the body does not reach the aircraft skin. Alternatively, or additionally, a ceiling of the body can be mounted to another structure of the aircraft, such as a cargo floor or strut, so that the hanging body does not contact the aircraft skin.

In any case, the plurality of holes allows releasing the hot air introduced into the body of the hot air duct over the entire area covered by the at least one second section. Thus, the larger the at least one second section is, the larger is the area in the aircraft (section), onto which the air jets stream. Thus, the area of the aircraft (section), which is used as a heat sink to cool the hot air, is predefined by the area of the at least one second section. This allows designing the hot air duct in accordance with the heat load (amount of heat) generated by the heat generating devices to be cooled.

Furthermore, in an implementation variant, the air released through the plurality of holes is cooled by the surrounding/adjacent aircraft skin and/or aircraft primary structure element(s). The cooled air can then be conveyed back to the heat generating devices or to any other section of the aircraft requiring a cold air stream.

In another implementation variant, the hot air duct can further comprise at least one strut arranged in the body and connecting a bottom and a ceiling of the body in a substantially vertical or slanted direction. The at least one strut can be a thread-like element connecting the ceiling and the bottom. Alternatively or additionally, at least one strut can extend in a longitudinal direction (of the body as well as the aircraft) and/or in a transverse direction (width-wise direction). The at least one strut, hence, is a sheet-like element and can be oriented along the longitudinal transverse direction or can be arranged diagonally through the body of the hot air duct. In case of a sheet-like strut, the strut divides the interior space/volume of the body in at least two adjacent chambers. In any case, the at least one strut defines a distance between the bottom and ceiling of the body, which likewise defines the shape of a cross-section of the body.

Furthermore, the at least one strut can extend in the longitudinal and/or transverse direction over the entire length and/or width of the body. Alternatively, the at least one strut can extend over only a portion of the length and/or width of the body.

The term "substantially vertical" is to be understood as, when the hot air duct is installed in an aircraft, the at least one strut being arranged along a virtual vertical line or at an angle of +/- 5° with respect to the virtual vertical align.

The term "slanted" is to be understood as connecting the ceiling and the body at predefined angle with respect to the virtual vertical line. As a mere example, the at least one strut can be arranged, so that it forms an angle with the virtual vertical line of at most 60°, or preferably at most 45°, most preferably at most 15°.

In a further implementation variant, the at least one strut can comprise one or more through holes. This allows a free distribution of the received hot air, and to build up the same pressure in each chamber, i.e. in the entire interior space of the body.

Alternatively or additionally, the at least one strut can be made of a non-elastic material. This allows predefining a size of each chamber and, hence, of the body, at least in the direction between ceiling and the bottom of the body (i.e., a vertical direction).

In yet another implementation variant, one or more of the at least one strut can be mounted inside of the body to form a sealed chamber (i.e., the strut is not having any hole). If such strut is further arranged in the longitudinal direction, at least two chambers can be formed in the body that extend over the entire length of the body. This further allows installing ducting from the inlet into each of the chamber is or to provide several inlets. By introducing the hot air into only one or more chambers allows inflating, i.e., "activating", only a portion of the body (viewing in the transverse direction). Thus, the cooling capacity of the hot air duct can be controlled by correspondingly controlling the hot air to be introduced into one or more longitudinally spanning chambers. The hot air can be cooled in accordance with the at least one first section and/or the at least one second section of the respective inflated chamber(s).

In an implementation variant, the hot air duct can further comprise a horizontal separation arranged between opposite lateral sides of the body and configured to separate the interior volume of the body in two longitudinally extending chambers arranged on top of each other. This allows inflating each of the chambers individually. Thus, if the lower chamber is inflated, a heat exchange with the aircraft skin and the aircraft structure arranged closer to the aircraft skin can be achieved. If the upper chamber is inflated, the heat exchange with the aircraft skin can be avoided or at least reduced.

In another implementation variant, the horizontal separation has a width larger than a distance between the opposite lateral sides of the body. The width of the horizontal separation is to be understood as the size of the horizontal separation in a transverse direction, particularly in a cross-section of the (inflated) body. Thus, when contemplating the inflated body, the horizontal separation does not divide the cross-section of the inflated body along a straight line (the shortest distance between two points on the opposite lateral sides), but along an arc. The length of the arc corresponds to the width of the horizontal separation. In other words, when contemplating the cross-section of the body, the horizontal separation is connected to each lateral side of the body at a particular location. A line drawn between each of these particular locations along the circumference of the inflated body corresponds to the maximum width of the horizontal separation.

As a mere example, the horizontal separation can have a width (or arc length) that corresponds to any value greater than the width of the body up to (and including) the length of the circumference of the body between the particular locations where the horizontal separation is connected to the opposite lateral sides of the body. Thus, the horizontal separation can huddle/abut against an upper or lower side of the body, depending on which chamber is inflated. Each of the upper and lower chamber can have a cross-sectional area that is equal to or less than a cross-sectional area of the body at the same longitudinal position.

It is to be understood that the two locations at the opposite lateral sides of the body, where the horizontal separation is connected to the body, can be located in the middle of the lateral sides contemplated in a vertical direction. Thus, the horizontal separation is arranged in a vertical centre of the body, and the upper and lower chambers may have more or less the same cross-sectional area when being inflated.

Alternatively, the two locations at the opposite lateral sides of the body can be arranged at different heights of the lateral sides or can be arranged at the same height of the lateral sides, but above or below the middle. Thus, the cross-sectional area of the upper and lower chamber can be predefined by the position of the two locations of the connecting points of the horizontal separation at the lateral sides. For instance, the cross-sectional area can be predefined based on the required volume flow of hot air to be transported through the respective chamber.

In yet another implementation variant, the hot air duct can further comprise an outlet. The outlet can be arranged anywhere along the longitudinal direction of the body. In order to achieve an air stream or air flow over the entire length (in the longitudinal direction) of the body, the outlet can be arranged at a downstream end of the body.

Furthermore, the horizontal separation can be connected to the downstream end of the body along a line running underneath the outlet, the inlet can have a lower inlet and an upper inlet, and the horizontal separation can be connected to the upstream end of the body along a line running between the lower inlet and the upper inlet.

This configuration allows guiding hot air through the lower inlet and, hence, into the lower chamber underneath the horizontal separation, or through the upper inlet and, hence, into the upper chamber arranged above the horizontal separation.

Since the horizontal separation is connected to the body underneath the outlet (i.e., the outlet is arranged above the horizontal separation), the hot air, when being received in the upper chamber, can stream from the upper inlet to the outlet. Thereby, the hot air bypasses the lower area of the body. In this case, the horizontal separation can simply hang by gravity or may be tightened as the body inflates (actually only the upper chamber inflates).

If the horizontal separation does not contact the bottom of the body, i.e. the horizontal separation being spaced apart from the bottom of the body in a vertical direction, there is no (direct) heat transfer/exchange between the hot air and the aircraft skin and/or aircraft structure at the bottom of the body. Therefore, the hot air leaving the body at the outlet can be used as a source of hot air for other purposes and/or can be guided overboard, such as through an opening in the aircraft skin. This bypass can be employed, for example, when the aircraft skin and/or aircraft structure is not cold, i.e., does not form a good heat sink, such as at times when the aircraft is on ground, in the sunlight or other warm ambient temperatures.

If the hot air is introduced into the hot air duct through the lower inlet, the horizontal separation will raise, while the lower chamber is inflated. In this case, any heat exchange with the aircraft skin and/or aircraft structure can take place (including the generation of air jets through holes in the bottom of the body).

It is to be understood that the bilge area may be delimited by another structure instead of the cargo floor. The present disclosure, hence, is not restricted to a cargo floor.

In an implementation variant, the aircraft section can further comprise a heat generating equipment, and a waste heat removal device configured to remove hot air from the heat generating equipment. The waste heat removal device is fluidly connected with the inlet of the hot air duct. Thus, the hot air duct can be employed as a heat sink or heat exchanger for the waste heat of the equipment.

The heat generating equipment can be, for example, any avionic, electric and/or electronic equipment installed in the aircraft. For instance, such equipment can be installed in an electronic equipment bay (E/E bay), which is usually located in the bottom area of the aircraft fuselage. Thus, the heat generating equipment is installed close to the bilge area, so that the waste heat (hot air) from the heat generating equipment can be conveyed into the hot air duct directly or with only a short ducting. The waste heat removal device can be any conveying device, such as a fan or the like, that conveys air from the heat generating equipment to/into the hot air duct.

In an implementation variant, the bilge area of the aircraft section can be arranged in front of or behind the E/E bay in the longitudinal direction of the aircraft. Thus, the hot air duct may be arranged towards the fore or aft of the aircraft. It is to be understood, that one or more hot air ducts can be arranged in the bilge area in front of and behind the E/E bay of the aircraft. In other words, any portion of the bilge area or the entire bilge area can be employed to install one or more hot air ducts respective of the location of the heat source.

According to a second aspect, an aircraft comprises the aircraft section of the first aspect.

In the following, the present disclosure will further be described with reference to exemplary implementations illustrated in the figures, in which:
- Figure 1: schematically illustrates a bilge area of an aircraft with potential waste heat removal;
- Figure 2: schematically illustrates an aircraft section including a hot air duct;
- Figure 3: schematically illustrates the bilge area of the aircraft section of Figure 2 in more detail;
- Figure 4: schematically illustrates a longitudinal cross-section of an aircraft section including an exemplary hot air duct;
- Figure 5: schematically illustrates transverse cross-sections of the hot air duct of Figure 4;
- Figure 6: schematically illustrates a perspective view of an exemplary hot air duct;
- Figure 7: schematically illustrates perspective views of another exemplary hot air duct in two different states; and
- Figure 8: schematically illustrates respective longitudinal cross-sections of the hot air duct of Figure 7.

In the following description, for purposes of explanation and not limitation, specific details are set forth in order to provide a thorough understanding of the present disclosure. It will be apparent to one skilled in the art that the present disclosure may be practiced in other implementations that depart from these specific details.

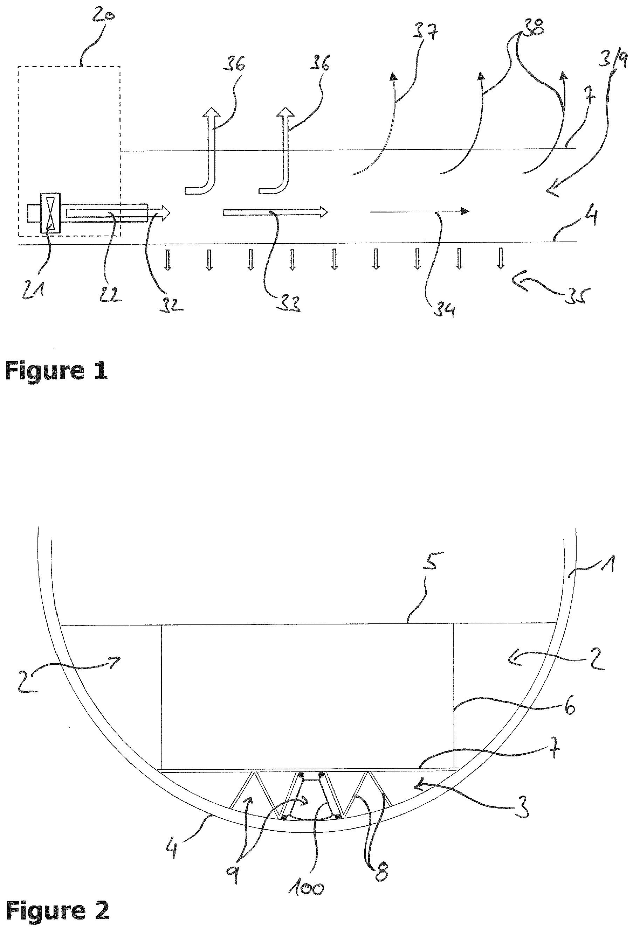

Figure 1 schematically illustrates a bilge area 3 of an aircraft 1 (Figure 2) with potential waste heat removal. Specifically, the bilge area 3 is delimited at its bottom by the aircraft skin 4, so that the bilge area 3 forms the lowest area in the fuselage of the aircraft. In this aircraft section, a heat generating equipment 20 can be installed. For example, avionic, electric and/or electronic components (not specifically illustrated) may be installed in a E/E bay (so that reference numeral 20 can likewise refer to such E/E bay).

A waste heat removal device in form of a conveying device 21, such as a fan, and a waste heat duct 22 can be provided to remove heat generated by the equipment 20 in form of hot air. The illustrated waste heat removal device 21, 22 is only schematically illustrated and may have any other form, shape and location.

Figure 1 illustrates the possibility of conveying the hot air through waste heat duct 22 into the bilge area 3, for example, into an area 9 between struts 8 and a cargo floor 7 (Figure 2) as well as the entire bilge area 3. The air removed from the equipment (bay) 20 by conveying device 21 may be replaced by cold air, in Figure 1, for example from a top or lateral side of the equipment 20. Thus, a continuous air stream can be achieved that cools the equipment 20 and conveys waste heat in form of hot air towards the bilge area.

Figure 1 illustrates the hot air stream in form of arrows, which indicate in form of their width the temperature of the air. Specifically, the larger the size of the arrow, the hotter is the air of the air stream. As can be derived from Figure 1, the hot air 32, 33, 34 conveyed by the conveying device 21 will come into contact with the aircraft skin 4. The aircraft skin 4, hence, functions as a heat exchanger with the ambient environment outside of the aircraft 1. Thus, waste heat can be radiated from the aircraft skin 4, which is illustrated by arrows 35. Likewise, aircraft structural elements, such as cargo floor 7 and/or struts 8 may likewise function as a heat sink for the hot air stream 32, 33, 34.

While moving along the bilge area 3, the air will cool down and will leave the bilge area 3 upwards as indicated by cooler air streams 36, 37, 38. For example, the air can leave the bilge area 3 at lateral sides of the cargo floor 7. With respect to Figure 2, the air may flow towards the triangle areas 2 at the lateral sides of the cargo floor 7 and usually delimited by a cabin floor 5 and Z-struts 6. Again, the thickness of the illustrated arrows 36, 37, 38 indicates the temperature of the corresponding air stream (the larger the size of the arrow 36, 37, 38, the hotter is the air of the respective stream).

It is, hence, possible to cool the air transporting the waste heat of the equipment 20 at the aircraft structural elements 7, 8 and/or the aircraft skin 4. However, as can be derived from upwards air streams 36, the air stream closest to the heat generating equipment 20 is the warmest air stream. If this air stream 36 reaches the heat generating equipment 20, a closed loop of a hot air stream may develop and the cooling of the equipment 20 is deteriorated. Likewise, as the air stream 36 is warmer than other air streams 37, 38 at the lateral sides of the aircraft 1, such warmer air 36 may reach the cabin above cabin floor 5 or at least requires different air-conditioning parameters in the longitudinal area corresponding to air streams 36.

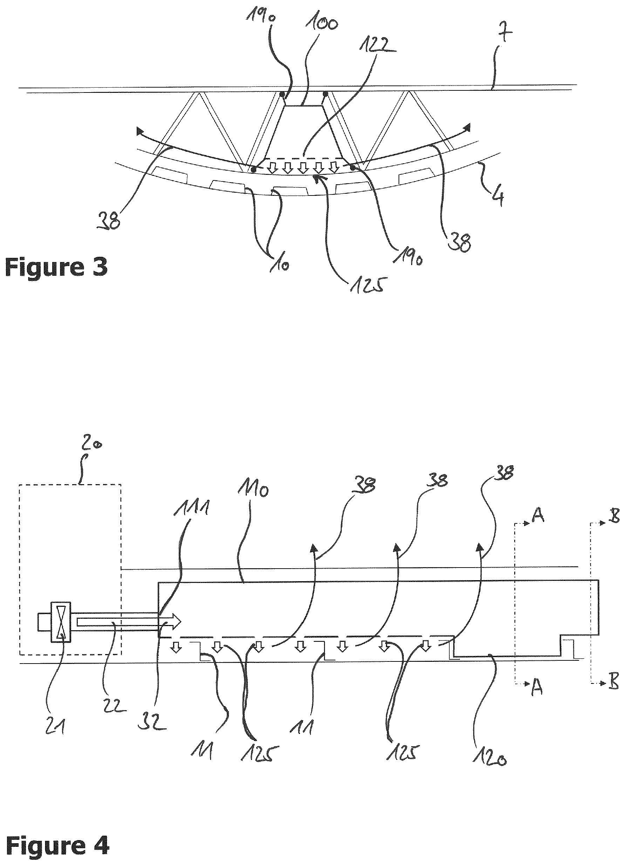

In order to improve the cooling of the air stream 32 leaving the waste heat duct 22, the present disclosure provides at least one hot air duct 100. A body 110 of the hot air duct 100 is schematically illustrated in Figure 2 in the bilge area 3. Figures 2 and 3 schematically illustrate an aircraft section (a transverse cross-section through the aircraft 1) including a bilge area 3. In the bilge area 3, aircraft structural elements are present, such as struts 8 carrying a cargo floor 7 and supporting the same on outer structural elements, such as stringers 10 running in a longitudinal direction of the aircraft 1 at the aircraft skin 4. The outer structural elements may further comprise frames 11 (see for example Figure 3) extending in a cross-sectional plane and circumferentially along the outer skin 4.

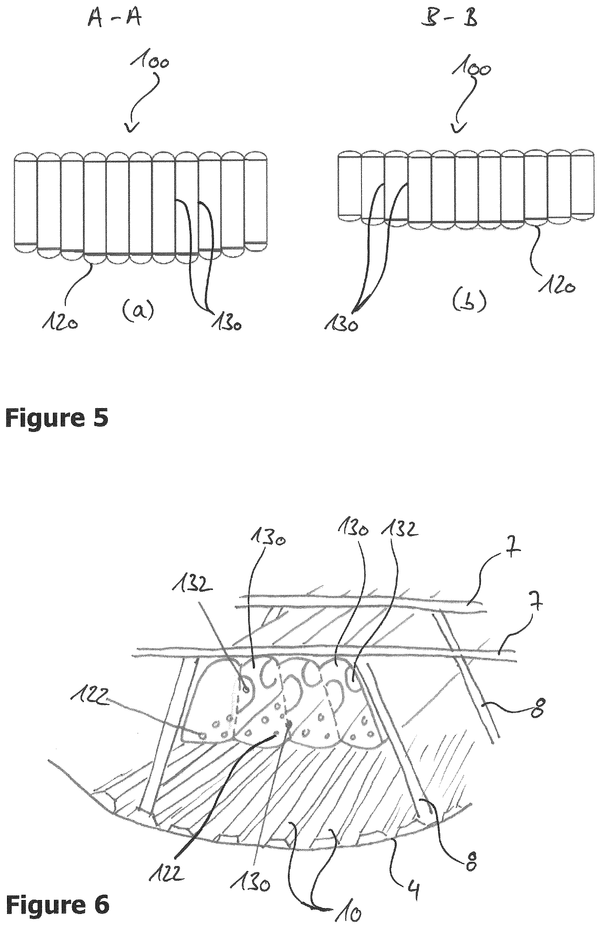

In a space 9 between the struts 8 is the body 110 of the hot air duct 100, that may extend in a longitudinal direction of the aircraft 1 and may have any desired length as will be explained with respect to Figures 4 and 5. The hot air duct 100 can likewise have more sections in the cross-sectional plane, for example, between more or other struts 8, or may otherwise be arranged differently in the bilge area 3 than the schematically illustrated example of Figure 3.

The body 110 of the hot air duct 100 can be mounted to the structural elements 7, 8 by a connector 190. As a mere example, the hot air duct 100 can hang at the cargo floor 7 or an upper portion of the strut 8. Likewise, the bottom edges of the hot air duct 100 can be mounted to outer structural elements, such as a lower portion of a strut 8, a frame 11, a stringer 10 or even the outer skin 4. Any such connector 190, however, is not required and the hot air duct 100 can simply lie on the structural elements, such as the frames 11, stringers 10, and the aircraft skin 4.

With respect to Figures 3 to 5, the hot air duct 100 can have optional features providing a heat exchange with the surrounding of the hot air duct 100. Specifically, a bottom 120 of the hot air duct 100 can have at least one first section configured to huddle against the aircraft skin 4, such as the section illustrated to the right in Figure 4. As can be derived from Figure 5, a height of the hot air duct 100 can be larger (cutting line A-A) in the at least one first section than in the remaining section(s) (cutting line B-B) of the body 110 of the hot air duct 100.

As a mere example, the body 110 may have sections of shorter height at each frame 11 and/or stringer 10, and only in the areas between two adjacent frames 11 and/or adjacent stringers 10, the hot air duct 100 has a larger height, in order to huddle/abut against the aircraft skin 4. It is to be understood that in the at least one first section, the bottom 120 of the body 110 may huddle/abut against the stringers 10. For instance, the stringers 10 may be arranged close to one another, so that the body 110 may lie 10. In this at least one first section, the hot air inside of the hot air duct 100 can transfer heat through the material of the body 110 and further through the aircraft skin 4 and/or through the stringers 10. For instance, when the aircraft flies at a high altitude, the aircraft skin and close-by structural elements 8, 10, 11 will be cold due to the ambient air outside of the aircraft 1 and can be used as a heat sink.

The hot air duct 100 can comprise at least one tuck, where a structural element mounted to the aircraft skin 4 is present, such as the stringers 10 and the frames 11. This facilitates that the hot air duct 100 huddles against the aircraft skin 4 between the structural elements 10, 11. Additionally or alternatively, the body 110 of the hot air duct 100 is shaped to match the grid of frames 11 and stringers 10. As a mere example, portions of the body 110 can be adhered to one another along the grid, in order to form the at least one first section. In any case, the bottom 120 of the body 110 can huddle/abut against the structural elements 8, 10, 11 due to the at least one tuck and/or adhered portion.

Figures 3 and 4 schematically illustrates a feature of the hot air duct 100 in form of at least one second section of the bottom 120 having a plurality of holes 122. Such holes 122 are configured to create air jets 125 by releasing the hot air from the body 110. The air 125 streaming out of the holes 122 will hit the outer skin 4 and further structural elements 10, 11, where it can cool down. From there the air will stream in a transverse direction to the lateral sides of the bilge area 3 (indicated as arrows 38). This cooled air 38 may then be conveyed back to the heat generating equipment 20.

The pressure inside of the body 110 can be static. For instance, if the air entering at the inlet 111, such as the air from the hot waste heat duct 22 connected to the inlet 111, is solely released through the holes 122, a static pressure will build up inside of the body 110. This pressure will inflate of the body 110, and a same air flow at each hole 122 will be achieved, i.e., a plurality of same or very similar air jets 125 can be formed over the entire length and width of the bottom 120 of the body 110. Therefore, the cooled air 38 will have the same (cold) temperature along the longitudinal direction of the body 110 (left-right direction in Figure 4), and the presence of warmer air 36 as explained with respect to Figure 1 can be avoided. This improves the cooling of the heat generating equipment 20 with the simple hot air duct 100.

While Figure 4 illustrates the body 110 of the hot air duct 100 as extending over four frames 11, the length of the body 110 is not restricted to this specific example. It is to be understood, that the size of the body 110 in the longitudinal direction (length) as well as the transverse direction (width) as well as its height may be chosen depending on the amount of heat to be distributed over the structural elements 7, 8, 10, 11 and/or the aircraft skin 4.

Furthermore, in order to achieve a particular cooling effect (cooling capacity), the plurality of holes 122 may have a predefined size and/or a predefined number of holes 122 is provided. Thus, a number of holes 122 per area unit as well as an opening area of the holes 122 can be predefined to set a particular cooling capacity. As a mere example, the second section of the bottom 120 can be provided with approximately 30 to 150 holes 122 per meter in the longitudinal direction, the holes 122 having a size of 0.15cm² to 0.8cm². It is to be understood that the width of the bottom 120 (size in the transverse direction) depends on the structural elements of the aircraft 1 provided in the region, wherein the body 110 inflates. For instance, struts 8, stringers 10, frames 11, etc. may define the available width of the body 110 and, hence, of the bottom 120.

The body 110 is made of a flexible material and is configured to be inflated, if air is received through the inlet 111. Thus, there is no necessity for a rigid, complex structure, such as ducting and (skin) heat exchangers. The body 110 functions as a ducting device as well as a heat exchange device. Due to the flexibility of the body 110, the hot air duct 100 of the present disclosure can be installed easily and in a fast manner. As a mere example, with respect to Figure 4, the body 110 (in a not-illustrated deflated state) may simply lie on the frames 11, stringers 10 and aircraft skin 4. When hot air is introduced into the body 110, such as when the conveying device 21 is activated, the body 110 inflates and achieves a form filling out the bilge area 3 or a section 9 thereof as illustrated in Figures 2 to 4.

This inflating includes that the body 110 achieves a shape huddling the aircraft skin 4 and/or being spaced apart from the aircraft skin 4 to allow the air of the air jets 125 to stream in the transverse direction of the aircraft 1 underneath the body 110. When achieving the inflated state/shape, the body 110 may lift itself from the aircraft skin 4, such as in the at least one second section, and/or may press itself into the areas between stringers 10 and frames 11 to huddle the aircraft skin 4.

As a mere example, the body 110 can be made of a fabric, foil or the like. In order to facilitate the distribution of the hot air over the bilge area 3, the material of the body 110 may not be fluid tight from the inside to the outside. Thus, the material of the body 110 can leak hot air over its entire surface or over designated areas of the body 110. This leaking of hot air has a similar effect as the air jets 125, as the hot air is distributed over the bilge area 3 and can be cooled by the corresponding structural elements 7, 8, 10, 11 and/or the aircraft skin 4. However, no holes 122 are required, through which material could enter the interior space of the body 110. As a mere example, a leaking capability could only be provided at the bottom 120.

Furthermore, the material of the body 110 can be resistant to any liquids or gases present in the bilge area 3.

It is to be understood that the body 110 can have a bottom 120 in accordance with the first section (huddling the aircraft skin 4 and without holes) over its entire bottom area (length and width), or can have a bottom 120 in accordance with the second section including holes 122 over its entire bottom area. In the first case (a bottom 120 of only the first section), an outlet (not illustrated in Figure 4) may be provided, in order to release the cooled air from the body 110. Such outlet is preferably installed at the downstream end of the body 110, in order to avoid the closed loop effect explained with respect to Figure 1.

Figure 6 schematically illustrates a perspective view of an exemplary hot air duct 100. The exemplary hot air duct 100 comprises at least one strut 130 arranged in the body 110 and connecting the bottom 120 and a ceiling of the body 110 in a substantially vertical or slanted direction. Such strut 130 facilitates stability of the body 110, particularly when being in its inflated state. Furthermore, such strut 130 can define the shape of the body 110 in a transverse direction as well as a longitudinal direction. The at least one strut 130 can be implemented in the form of one or more threads or wire-like elements, or can be implemented (as illustrated in Figure 6) as sheet-like elements extending in the longitudinal direction. For instance, the at least strut 130 may be made of a non-elastic material, in order to predefined the inflated shape of the body 110.

On the one hand, the sheet-like struts 130 may divide the interior space of the body 110 into different (longitudinally arranged) chambers. By branching or dividing the inlet 111 to individually introduce hot air into one or more of such chambers, the hot air duct 100 can be provided with different cooling capacities depending on the number of inflated chambers.

On the other hand, as illustrated in Figure 6, the struts 130 may include one or more through holes 132, in order to achieve the same internal pressure on each chamber fluidly connected by the through holes 132.

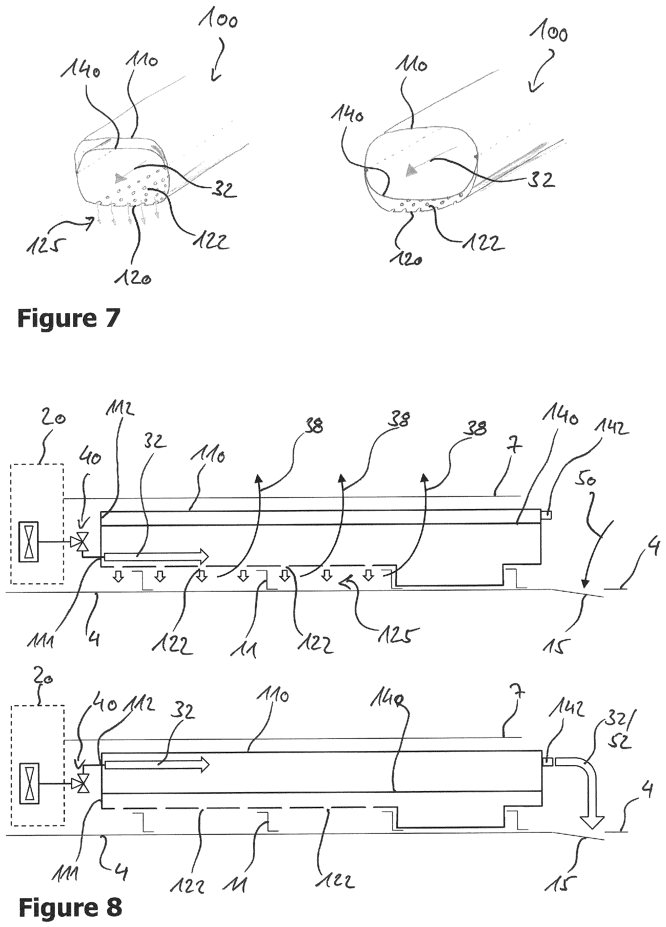

Figures 7 and 8 schematically illustrate another exemplary hot air duct 100 in two different states, wherein Figure 7 schematically illustrates perspective views and Figure 8 schematically illustrates respective longitudinal cross-sections of the hot air duct 100. This exemplary hot air duct 100 comprises an optional horizontal separation 140 arranged between opposite lateral sides of the body 110. The horizontal separation 140 is configured to separate the interior volume of the body 110 in two longitudinally extending chambers (upper and lower chambers).

As can be derived from Figure 7, the horizontal separation 140 can have a width larger than a distance between the opposite lateral sides of the body 110 when being inflated. Thus, the horizontal separation 140 can flip to either side of a (horizontal) centre line of the body 110.

To the left in Figure 7, the hot air from waste heat duct 22 is introduced into the lower chamber, so that this portion of the body 110 inflates and the horizontal separation 140 will be lifted up. As illustrated in Figure 8, a (three way) valve 40 may be provided, which can guide the hot air from waste heat duct 22 into a first inlet 111, i.e., a lower inlet 111, thereby inflating the lower chamber. With respect to the upper drawing of Figure 8, in this state the cooling capability of the hot air duct 100 can be used as explained with respect to Figures 2 to 6.

With reference to the right drawing of Figure 7 and the lower drawing of Figure 8, the hot air from the waste heat duct 22 can be introduced into the upper chamber, for example, via the valve 40 and a second inlet, i.e., an upper inlet 112. This will inflate the upper chamber, and the horizontal separation 140 will flip (or already hangs) towards the bottom 120.

The horizontal separation 140, in this configuration, is connected to an upstream end of the body 110 along a line running between the lower inlet 111 and the upper inlet 112. Thus, a fluid separation of the upper and lower chambers is achieved by the horizontal separation 140. Likewise, the horizontal separation 140 can be connected to a downstream end of the body 110 to fluidly separate the upper and lower chambers. It is to be understood that the horizontal separation 140 is connected to the lateral sides of the body 110 along the longitudinal direction thereof in a fluid tight manner.

The hot air duct 100 can further comprise an outlet 142. Such outlet 142 may be optionally implemented in case the bottom 120 is formed solely of the first section huddling the aircraft skin 4. In view of the configuration of Figures 7 and 8, the outlet 142 can be provided in a region of the body 110 forming/delimiting the upper chamber, i.e. the horizontal separation 140 is connected to the downstream end of the body 110 along a line running underneath the outlet 142. Thus, when the hot air is introduced through the upper inlet 112, the hot air can bypass the bottom 120 of the body 110, and less or no cooling of the hot air takes place. In this case, the horizontal separation 140 should be configured (sized in widthwise direction) to not contact the bottom 120, i.e. to be spaced apart from the bottom 120, when the upper chamber is inflated.

The hot air can be released from the body 110 through the outlet 142 into the bilge area 3. As a mere example, the outlet 142 can be arranged close to a flap 15 in the aircraft skin 4 (or other opening in the aircraft skin 4), through which (when in an open state) the hot air can be released overboard, i.e., can be released into the ambient environment of the aircraft 1. This is illustrated by the arrow 32/52 in Figure 8, which is also illustrated as having a size corresponding to the arrow 32 of the introduced hot air, meaning that the temperature of the air at the outlet 142 is (almost) the same as at the inlet 112.

The flap or opening 15 can also be used in case of the lower chamber being inflated, for example, to exhaust air 50 from the bilge area 3 overboard.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An aircraft section, comprising:
an aircraft skin (4);
a cargo floor (7) forming a bilge area (3) between the aircraft skin (4) and the cargo floor (7); and
a hot air duct (100) arranged in the bilge area (3), wherein the hot air duct (100) comprises:
a body (110);
an inlet (111, 112) in the body (110) and configured to receive hot air,
wherein the body (110) is made of a flexible material and is configured to be inflated by the air received through the inlet (111, 112),
wherein the body (110) comprises a bottom (120) having at least one section with a plurality of holes (122) facing the aircraft skin (4) and configured to create air jets by releasing the hot air from the inflated body (110).

2. The aircraft section of claim 1, wherein the bottom (120) has at least one further section configured to huddle against the aircraft skin (4) in the bilge area (3),

3. The aircraft section of claim 2, further comprising:
wherein the at least one further section is formed corresponding to or has a size fitting between structural elements (10, 11) arranged on the aircraft skin (4).

4. The aircraft section of claim 1, wherein the body (110) corresponding to the at least one section is formed or sized, so that the at least one section is spaced apart from the aircraft skin (4).

5. The aircraft section of claim 3 or 4, wherein the plurality of holes (122) is configured to release the hot air from the body (110) with a volume flow equal to or less than a volume flow of the received hot air entering the body (110) at the inlet (111).

6. The aircraft section of one of claims 1 to 5, wherein the hot air duct (100) further comprises:
at least one strut (130) arranged in the body (110) and connecting the bottom (120) and a ceiling of the body (110) in a substantially vertical or slanted direction.

7. The aircraft section of claim 6, wherein the at least one strut (130) comprises one or more through holes (132), and/or wherein the at least one strut (130) is made of a non-elastic material.

8. The aircraft section of one of claims 1 to 7, wherein the hot air duct (100) further comprises:
a horizontal separation (140) arranged between opposite lateral sides of the body (110) and configured to separate the interior volume of the body (110) in two longitudinally extending chambers,
wherein the horizontal separation (140) has a width larger than a distance between the opposite lateral sides of the body (110).

9. The aircraft section of claim 8, wherein the hot air duct (100) further comprises:
an outlet (142), preferably arranged at a downstream end of the body (110),
wherein the horizontal separation (140) is connected to the downstream end of the body (110) along a line running underneath the outlet (142),
wherein the inlet has a lower inlet (111) and an upper inlet (112), and
wherein the horizontal separation (140) is connected to the upstream end of the body (110) along a line running between the lower inlet (111) and the upper inlet (112).

10. The aircraft section of claim 10, further comprising:
a heat generating equipment (20); and
a waste heat removal device (21, 22) configured to remove hot air from the heat generating equipment (20) and fluidly connected with the inlet (111, 112) of the hot air duct (100).

11. An aircraft (1), comprising:
at least one aircraft section of one of claims 1 to 10.

## Patentansprüche

1. Flugzeugabschnitt, umfassend: eine Flugzeughaut (4); einen Frachtraumboden (7), der einen Bilgebereich (3) zwischen der Flugzeughaut (4) und dem Frachtraumboden (7) bildet; und einen Heißluftkanal (100), der im Bilgebereich (3) angeordnet ist, wobei der Heißluftkanal (100) umfasst:
einen Körper (110); einen Einlass (111, 112) im Körper (110), der so konfiguriert ist, dass er Heißluft aufnimmt, wobei der Körper (110) aus einem flexiblen Material hergestellt und so konfiguriert ist, dass er durch die durch den Einlass (111, 112) aufgenommene Luft aufgeblasen wird, wobei der Körper (110) einen Boden (120) umfasst, der mindestens einen Abschnitt mit einer Vielzahl von Löchern (122) aufweist, die der Flugzeughaut (4) zugewandt und so konfiguriert sind, dass sie Luftstrahlen erzeugen, indem sie die Heißluft aus dem aufgeblasenen Körper (110) freisetzen.

2. Flugzeugabschnitt nach Anspruch 1, wobei der Boden (120) mindestens einen weiteren Abschnitt aufweist, der so konfiguriert ist, dass er sich im Bilgebereich (3) an die Flugzeughaut (4) anschmiegt.

3. Flugzeugabschnitt nach Anspruch 2, ferner umfassend: wobei der mindestens eine weitere Abschnitt entsprechend ausgebildet ist oder eine Größe aufweist, die zwischen auf der Flugzeughaut (4) angeordnete Strukturelemente (10, 11) passt.

4. Flugzeugabschnitt nach Anspruch 1, wobei der Körper (110) entsprechend dem mindestens einen Abschnitt so ausgebildet oder dimensioniert ist, dass der mindestens eine Abschnitt von der Flugzeughaut (4) beabstandet ist.

5. Flugzeugabschnitt nach Anspruch 3 oder 4, wobei die Vielzahl von Löchern (122) so konfiguriert ist, dass sie die Heißluft aus dem Körper (110) mit einem Volumenstrom freisetzt, der gleich oder geringer als ein Volumenstrom der aufgenommenen Heißluft ist, die am Einlass (111) in den Körper (110) eintritt.

6. Flugzeugabschnitt nach einem der Ansprüche 1 bis 5, wobei der Heißluftkanal (100) ferner umfasst: mindestens eine Strebe (130), die im Körper (110) angeordnet ist und den Boden (120) und eine Decke des Körpers (110) in einer im Wesentlichen vertikalen oder geneigten Richtung verbindet.

7. Flugzeugabschnitt nach Anspruch 6, wobei die mindestens eine Strebe (130) eine oder mehrere Durchgangslöcher (132) umfasst, und/oder wobei die mindestens eine Strebe (130) aus einem unelastischen Material hergestellt ist.

8. Flugzeugabschnitt nach einem der Ansprüche 1 bis 7, wobei der Heißluftkanal (100) ferner umfasst: eine horizontale Trennung (140), die zwischen gegenüberliegenden lateralen Seiten des Körpers (110) angeordnet und so konfiguriert ist, dass sie das Innenvolumen des Körpers (110) in zwei sich in Längsrichtung erstreckende Kammern trennt, wobei die horizontale Trennung (140) eine Breite aufweist, die größer als ein Abstand zwischen den gegenüberliegenden lateralen Seiten des Körpers (110) ist.

9. Flugzeugabschnitt nach Anspruch 8, wobei der Heißluftkanal (100) ferner umfasst: einen Auslass (142), der vorzugsweise an einem stromabwärtigen Ende des Körpers (110) angeordnet ist, wobei die horizontale Trennung (140) mit dem stromabwärtigen Ende des Körpers (110) entlang einer Linie verbunden ist, die unterhalb des Auslasses (142) verläuft, wobei der Einlass einen unteren Einlass (111) und einen oberen Einlass (112) aufweist, und wobei die horizontale Trennung (140) mit dem stromaufwärtigen Ende des Körpers (110) entlang einer Linie verbunden ist, die zwischen dem unteren Einlass (111) und dem oberen Einlass (112) verläuft.

10. Flugzeugabschnitt nach Anspruch 10, ferner umfassend: eine wärmeerzeugende Ausrüstung (20); und eine Abwärmeabfuhrvorrichtung (21, 22), die so konfiguriert ist, dass sie Heißluft aus der wärmeerzeugenden Ausrüstung (20) abführt und mit dem Einlass (111, 112) des Heißluftkanals (100) fluidisch verbunden ist.

11. Flugzeug (1), umfassend: mindestens einen Flugzeugabschnitt nach einem der Ansprüche 1 bis 10.

## Revendications

1. Une section d'aéronef, comprenant: un revêtement d'aéronef (4); un plancher de soute (7) formant une zone de fond de cale (3) entre le revêtement d'aéronef (4) et le plancher de soute (7); et un conduit d'air chaud (100) disposé dans la zone de fond de cale (3), dans laquelle le conduit d'air chaud (100) comprend: un corps (110) ; une entrée (111, 112) dans le corps (110) et configurée pour recevoir de l'air chaud, dans laquelle le corps (110) est constitué d'un matériau flexible et est configuré pour être gonflé par l'air reçu à travers l'entrée (111, 112), dans laquelle le corps (110) comprend un fond (120) présentant au moins une section dotée d'une pluralité de trous (122) faisant face au revêtement d'aéronef (4) et configurés pour créer des jets d'air en libérant l'air chaud depuis le corps gonflé (110).

2. Section d'aéronef selon la revendication 1, dans laquelle le fond (120) présente au moins une section supplémentaire configurée pour s'appliquer contre le revêtement d'aéronef (4) dans la zone de fond de cale (3).

3. Section d'aéronef selon la revendication 2, comprenant en outre: dans laquelle ladite au moins une section supplémentaire est formée de manière correspondante à ou présente une taille s'adaptant entre des éléments structurels (10, 11) disposés sur le revêtement d'aéronef (4).

4. Section d'aéronef selon la revendication 1, dans laquelle le corps (110) correspondant à ladite au moins une section est formé ou dimensionné de sorte que ladite au moins une section soit espacée du revêtement d'aéronef (4).

5. Section d'aéronef selon la revendication 3 ou 4, dans laquelle la pluralité de trous (122) est configurée pour libérer l'air chaud depuis le corps (110) avec un débit volumétrique inférieur ou égal à un débit volumétrique de l'air chaud reçu entrant dans le corps (110) au niveau de l'entrée (111).

6. Section d'aéronef selon l'une des revendications 1 à 5, dans laquelle le conduit d'air chaud (100) comprend en outre: au moins une entretoise (130) disposée dans le corps (110) et reliant le fond (120) et un plafond du corps (110) dans une direction sensiblement verticale ou inclinée.

7. Section d'aéronef selon la revendication 6, dans laquelle ladite au moins une entretoise (130) comprend un ou plusieurs trous traversants (132), et/ou dans laquelle ladite au moins une entretoise (130) est constituée d'un matériau non élastique.

8. Section d'aéronef selon l'une des revendications 1 à 7, dans laquelle le conduit d'air chaud (100) comprend en outre: une séparation horizontale (140) disposée entre des côtés latéraux opposés du corps (110) et configurée pour séparer le volume intérieur du corps (110) en deux chambres s'étendant longitudinalement, dans laquelle la séparation horizontale (140) présente une largeur supérieure à une distance entre les côtés latéraux opposés du corps (110).

9. Section d'aéronef selon la revendication 8, dans laquelle le conduit d'air chaud (100) comprend en outre: une sortie (142), de préférence disposée au niveau d'une extrémité aval du corps (110), dans laquelle la séparation horizontale (140) est reliée à l'extrémité aval du corps (110) le long d'une ligne s'étendant au-dessous de la sortie (142), dans laquelle l'entrée présente une entrée inférieure (111) et une entrée supérieure (112), et dans laquelle la séparation horizontale (140) est reliée à l'extrémité amont du corps (110) le long d'une ligne s'étendant entre l'entrée inférieure (111) et l'entrée supérieure (112).

10. Section d'aéronef selon la revendication 10, comprenant en outre: un équipement générant de la chaleur (20); et un dispositif d'évacuation de chaleur résiduelle (21, 22) configuré pour éliminer de l'air chaud de l'équipement générant de la chaleur (20) et relié de manière fluide à l'entrée (111, 112) du conduit d'air chaud (100).

11. Aéronef (1), comprenant: au moins une section d'aéronef selon l'une des
revendications 1 à 10.
